Europäisches Patentamt

European Patent Office

Office européen des brevets

(11) Publication number: **0 243 346**
**B1**

## (12) EUROPEAN PATENT SPECIFICATION

(45) Date of publication of patent specification: **28.03.90**

(21) Application number: **85900476.4**

(22) Date of filing: **18.12.84**

(86) International application number:
**PCT/GB84/00436**

(87) International publication number:
**WO 86/03687 03.07.86 Gazette 86/14**

(51) Int. Cl.⁵: **B 01 D 27/08, B 01 D 27/10**

㉓ **FILTER.**

(43) Date of publication of application:
**04.11.87 Bulletin 87/45**

(45) Publication of the grant of the patent:
**28.03.90 Bulletin 90/13**

(84) Designated Contracting States:
**AT BE CH DE FR LI LU NL SE**

(56) References cited:
**DE-A-2 213 874**
**FR-A-2 404 456**
**GB-A-1 604 831**
**US-A-1 663 322**
**US-A-2 253 686**
**US-A-2 928 499**

(73) Proprietor: **SELSDON, Leslie Donald**
**41 Cumberland Court Great Cumberland Place**
**London W1H 7LG (GB)**

(72) Inventor: **SELSDON, Leslie Donald**
**41 Cumberland Court Great Cumberland Place**
**London W1H 7LG (GB)**

(74) Representative: **Smart, Peter John et al**
**W.H. BECK, GREENER & CO 7 Stone Buildings**
**Lincoln's Inn**
**London WC2A 3SZ (GB)**

Courier Press, Leamington Spa, England.

## Description

This invention relates to filter units and primarily but not exclusively to the field of filtration of lubricating oil used in internal combustion engines, but is not restricted to such use and may be utilised in other contexts.

It is conventional, in the filtration of lubricating oil used in internal combustion engines, to provide a so-called full-flow filter unit. This receives oil under pressure from the usual oil flow circuit of the engine and the flow of oil is directed through a filter unit having flow paths of such small dimensions that particles of foreign matter, especially carbon, are trapped by the filter unit, whereby the oil returns to the system in a considerably cleaner state. In order to obtain adequate treatment of the total quantity of oil available in the lubricating system of the engine, it is necessary for practical purposes to ensure that there is a relatively rapid flow of oil through the filter unit, say of the order of 9 litres/minute (2 gallons per minute). Such a rapid flow, with filtration down to say 25 µm, hereinafter referred to for convenience as "full-flow", is not compatible (in a filter unit of a practicable small size) with filtration in a filter unit of very small pore size, say of the order of 1 µm, hereinafter called for convenience "micron" filtration. Nevertheless, as there is a considerable content of such very small particles in engine oil, it is desirable to be able to remove such particles by micron-size filtration if at all possible.

British Patent Specification No. 1236805 (Russo) described the use of a paper tissue roll as a filtering medium. As will be discussed below, this is a medium suitable for micron filtration of lubricating oil but the specification shows only a full-flow filter based on this material. This would cause excessive back pressure and insufficient flow.

British Patent Specification No. 965328 (Filterwerk) shows a filter unit containing a coarse filter and a "fine filter" arranged in series for full-flow of engine oil. Accordingly it may be deduced that either the "fine filter" is not a micron filter or the filter unit will suffer from the same problems as that of Russo. A by-pass valve is provided enabling oil to by-pass the fine filter if that filter blocks. Normally the by-pass is closed by a spring loaded valve and oil does not flow through the by-pass in normal use.

It has been proposed to provide a micron filter to operate in conjunction with a conventional engine oil filter. This micron filter was a separate unit and needed to be connected by special drillings made to oil galleries of an engine or by T-connectors inserted in oil lines. Each engine required a different connection technique and the filter was not sufficiently convenient in use to be successful. Also as the arrangement was parallel, unfiltered oil was liable to be presented to the micron filter causing this to become clogged sooner than necessary.

A coarse filter and fine filter arranged in parallel in a single housing has been proposed but this necessarily results in unfiltered oil being presented to the fine filter.

It would accordingly be desirable to provide a filter unit with which a full-flow system may be converted in a quick, simple and inexpensive manner to a system which ensures that a proportion of the total filtered oil flow is always undergoing finer, e.g. micron-size filtration.

An alternative would be to provide a fine filter unit capable of being used on the conventional filter mount in conjunction with a coarse filter unit.

Accordingly, in a first aspect, the invention provides a fine filter unit adapted for interpolation for between a coarse filter unit and a mounting which normally receives said coarse filter unit directly thereon, wherein the fine filter unit comprises a housing having a pair of mounting locations, a first and a second inlet for liquid and a first and a second outlet for liquid, the first inlet and the second outlet being provided at one said mounting location and the second inlet and the first outlet being provided at the other said mounting location, coupling means at each said mounting location respectively coupling the fine filter unit to said coarse filter unit and to said filter mounting, means in said housing defining a first flow passage for liquid between the first inlet and the first outlet of the housing, means in said housing defining a second flow passage for liquid between the second inlet and the second outlet of the housing, and a fine filter member in said housing for removing particles of 5 µm (preferably 1 µm) and greater, wherein said second flow passage includes a path through said fine filter member and a by-pass path about said fine filter member whereby in normal use there is simultaneous flow through said fine filter member and said by-pass path such that a proportion only of liquid passing through the second flow path passes through said fine filter member.

Preferably, said mounting locations are a pair of opposed end walls and the first inlet and the second outlet are provided in one end wall and the first outlet and the second inlet are provided in the other end wall.

The unit may comprise as said coupling means a threaded bore in one end wall for connecting the unit to a source of liquid to be filtered and a threaded spigot on the other end wall for connecting the unit to a coarse filter unit.

Said threaded bore is preferably at said second outlet and said threaded spigot is then at said second inlet.

When a unit according to the first aspect of the invention is positioned in series with a conventional full-flow filter, that proportion of the filtered liquid passing through the full-flow filter unit which cannot pass through the micron filtration path, due to the relative constriction of the latter, is enabled to flow more easily unhindered through the by-pass path.

It should be noted that the by-pass path is not an emergency path closed in normal use as in specification 965328 but is part of the normal flow path through the unit. Generally the resistance to flow of the by-pass path will be such that most of the fluid passing through the unit takes this route.

Preferably, the resistance to flow of the by-pass and of the micron filter are so balanced that lubricating oil (e.g. SAE 20/50) will flow through these routes in the volume ratio of at least 5:1, preferably about 10:1.

The by-pass may include a flow restrictor means, which may be variable and resiliently loaded in a manner to tend to increase restriction of flow, e.g. a valve element urged towards a valve seating by resilient loading. The variable type of restrictor may close the by-pass path when the unit is not in use. Alternatively, the flow restrictor means may be permanently open and either variable or fixed in its degree of restriction.

A common form of filter mount comprises a body having a connecting surface with openings communicating with a supply conduit and a return conduit, and a threaded stem projecting centrally if said surface to receive a threaded sleeve on a connecting surface of the filter unit which in turn has openings for the liquid inlet and outlet. Advantageously the fine filter unit has corresponding connector surfaces.

A tubular member may be provided extending axially through said housing between said threaded bore and threaded spigot, a space may thus be generated within the housing around said tubular member, said second inlet and said second outlet opening into said annular space, and said fine filter member being situated within this annular space.

Said by-pass may be coaxial with said tubular member.

The auxiliary body can thus be interposed between such a filter mount and such a filter unit without modification of either.

In a first preferred construction, the by-pass flow path is defined by a plurality of longitudinally running slots in an annular member disposed about a central sleeve of the filter unit, and the fine filter member is disposed annularly externally of the annular member.

In another embodiment said housing has a removable end cap carrying said filter member, and said by-pass is advantageously constituted by a plurality of passages bounded by a finned spacer member and said filter member disposed about said spacer member.

In a second aspect the invention provides filtration apparatus comprising a housing having an inlet and an outlet for liquid to be filtered, means defining a flow path between said inlet and said outlet, said flow path containing in series a coarse filter member for treating at least substantially all of the liquid passing through the flow path and a fine filter member capable of removing particles of 5 µm (preferably 1 µm) and greater, said fine filter member consisting essentially of a roll of paper tissue material which is under radial compression which increases progressively in the flow direction, wherein the flow path includes a by-pass around said fine filter member for a proportion of liquid passing through the flow path which by-pass offers no greater resistance to flow than said fine filter member.

Said coarse filter member and said fine filter member are preferably arranged one behind the other in said housing.

The housing preferably comprises a mounting plate member having an axially located threaded bore for mounting on a complimentary threaded stem and defining said outlet and having at least one liquid inlet passageway defining said inlet, a body portion closed at one end and mounted on said mounting plate member at the other end thereof and an axially extending tube extending from adjacent and said closed end of the body portion to said threaded bore.

The by-pass may be provided by one or more axially running external grooves in the tube.

The coarse filter member preferably coaxially surrounds the tube adjacent the mounting plate member and the said fine filter member than coaxially surround the tube between the coarse filter member and said closed end.

Said by-pass path may extend between said fine filter member and the exterior of said tube along the length of the fine filter member towards said closed end of the body portion.

Such a filter unit preferably is adapted simply to replace a conventional disposable screw-on engine oil filter.

Preferably, the body portion is snap fitted to the mounting plate member by engagement of snap coupling elements provided on the body portion and mounting plate member.

The body portion, mounting plate member and tube are each and all preferably formed from a plastics material e.g. by injection moulding. Preferably this is sufficiently resistant to oil and heat that the unit is suitable for use as an engine oil filter. A particularly preferred material is a suitable grade of nylon, such as "Maranyl" (a trade mark of ICI Plc). The plastics material may be fibre reinforced.

Preferably, the filter employed according to the first aspect of the invention also comprises rolled paper tissue.

The filter may comprise tissue enclosed within mesh.

In a third aspect, the invention provides a fine filter unit for connection to a coarse filter unit providing inlet and return through flow paths, the fine filter unit comprising a housing having a wall member providing a mounting face and containing a hollow cylindrical fine filter member capable of filtration to remove particles of dimensions of 5 micrometres (preferably 1 micrometre) and greater, an inlet in said mounting face for liquid to be filtered, an outlet in the mounting face for filtered liquid, a flow path for liquid within the housing between an inlet to one annular end face of said fine filter member and an outlet from the other annular end face of said fine filter member, and a by-pass communicating between said inlet and said outlet of the filter unit within the housing, which by-pass has a resistance to flow of liquid no greater than that of the fine filter member whereby in use a proportion only of liquid passes through the fine filter member.

Preferably, the unit further comprises a tube open at one end extending from said outlet within the housing, the hollow cylindrical fine filter member surrounding said tube within said housing, and said by-pass flow path extending between said fine filter member and said tube away from said wall member along the exterior of said tube toward the open end thereof.

In order that the nature of the invention may be readily ascertained, embodiments of filter unit in accordance therewith are hereinafter particularly described with reference to the accompanying drawings, wherein:

Fig. 1 is a composite view, with the various items shown in axially separated condition, of a representative filter mount, a first embodiment of an auxiliary filter unit, and a conventional full-flow filter unit;

Fig. 2 is an axial section of a second embodiment of an auxiliary filter unit;

Figure 3 is a composite view, with the various items shown in axially separated condition, of a representative filter mount, a third embodiment of an auxiliary filter unit, and a conventional full-flow filter unit;

Fig. 4 is a plan view of the auxiliary filter unit, seen in the direction of the arrow "A" in Fig. 3;

Fig. 5 is an underplan view of the auxiliary filter unit, seen in the direction of the arrow "B" in Fig. 3;

Figure 6 is a view in axial section of a fourth embodiment of an auxiliary filter unit;

Fig. 7 is an end elevation of the auxiliary filter unit of Fig. 6, viewed in the direction of the arrow "C" in Fig. 6;

Fig. 8 is a radial section of the auxiliary filter unit of Fig. 6, taken on the line "D—D" of Fig. 6;

Figure 9 is a composite view with the various components shown axially separated and in axial section, of a coarse filter and a unit according to a fifth embodiment of the invention;

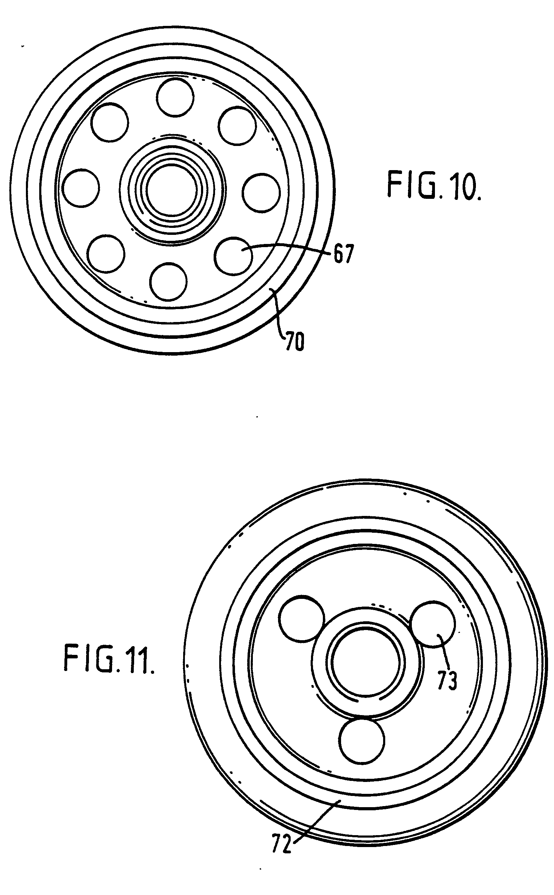

Figure 10 is an underplan view of the coarse filter of Figure 9 as seen along arrow 'A' of Figure 9;

Figure 11 is an underplan view of the unit of the invention of Figure 9 as seen along arrow 'B' of Figure 9; and

Figure 12 is an axial sectional view of a sixth unit according to the invention.

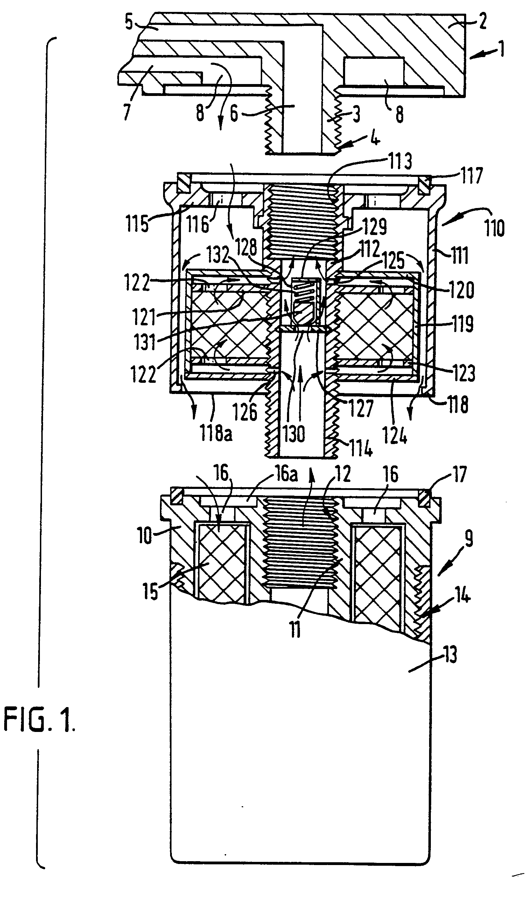

Referring to Figure 1, the conventional filter mount 1 comprises a body 2 having a central stem 3 with an external screw-threading 4. A first internal conduit 5 leading from the oil flow system of the engine communicates with a central inflow passage 6 of the stem 3. A second internal conduit 7 opens at the underside of the body 2 at openings 8, 8 for outflow of unfiltered oil back from the engine.

A conventional full-flow oil filter unit 9 comprises a body 10 having a central sleeve 11 which is internally threaded at 12, to correspond to the external threading 4 of the stem 3. A cup 13 is threaded onto the body 10 at 14. The sleeve 11 extends almost to the base of the cup 13 but stops short of the base of the cup. About the sleeve 11 is disposed an annular full flow filter element 15. The body 10 has openings 16 positioned to correspond to the openings 8, 8 of the filter mount 1. A gasket 17 is disposed in a recess at the upper face of the body 10, to abut against the underside of the body 2 of the mount.

In normal use, the filter unit 9 is engaged onto the mount 1 by threading the sleeve 11 onto the stem 3 until the filter unit is sealed to the mount by the gasket 17. Oil is fed under pressure from the engine via the conduit 7 and into the openings 16 to flow through the filter element 15, and back to the engine via the sleeve 11 and the conduit 5. As so far described, the construction and operation are representative of the conventional full-flow filter system.

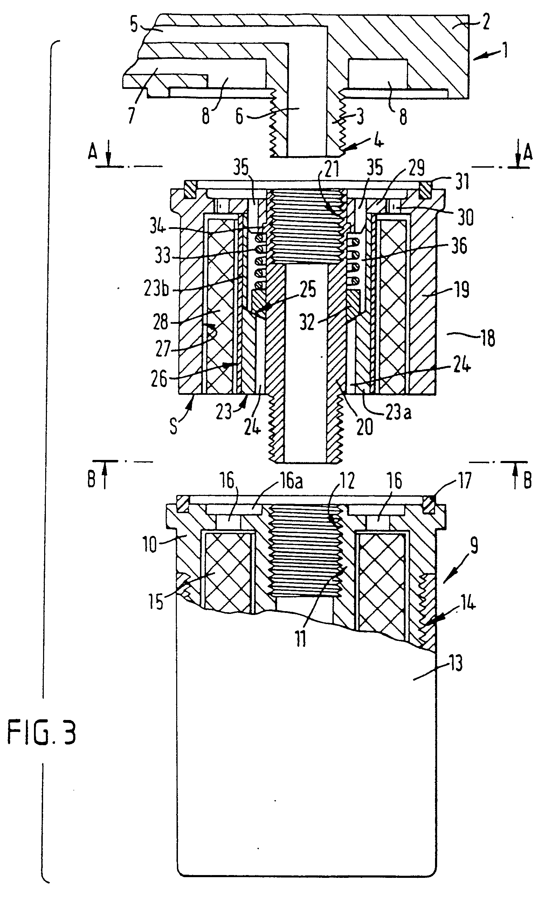

Whilst it is conventional for the flow and return of oil from and to the engine to be as illustrated, an alternative arrangement would be to have the flow through conduit 5 and the return through conduit 7. Figures 3 to 8 deal with such a reverse of the conventional arrangement.

Referring to Figure 1, there is shown an auxiliary filter unit 110 which has a generally cup-shaped body 111 coaxially surrounding a tubular member 112 having at its upper end a widened bore which is threaded at 113 to receive the threaded stem 3 of the filter mount. Below the internally threaded portion 113 the tubular member is of reduced diameter and externally threaded, terminating in an externally threaded portion 114 to provide a stem portion capable of threaded engagement in the central sleeve 11 of the filter unit 9.

The body 111 comprises a cylindrical wall terminating in a transverse wall 115 in which are provided apertures 116 which, in use, communicate with apertures 8 of the filter mount 1. An annular gasket 117 is positioned to abut and seal against the body 2 of the filter mount 1. The cylindrical wall of the body 111 terminates in an inwardly extending annular flange 118, the body otherwise being open at this end at 118a. Within the body 111 is provided a cup-shaped member 119 having a cylindrical wall and at its upper end as seen in the drawing a transverse end wall 120 having a central threaded aperture screwed down the tubular member 112 to abut the annular shoulder formed between the larger and reduced diameter portions of the tubular member. A first bulkhead 121 in the form of a ciruclar wall member having a central threaded aperture and outwardly thereof a plurality of smaller apertures 122 is screwed down the external thread of the tubular member 112 sealing against the cylindrical wall of the member 119 to be slightly spaced from the transverse wall 120. A filter material in the form of a roll of paper tissue coaxially surrounds the tubular member 112 immediately below the bulkhead 121. A second bulkhead 123 similar to bulkhead 121 and also including apertures 122 is screwed down the external thread of the tubular member 112 to compress the filter material and once again to seal against the wall of the member 119.

The member 119 may be truly cylindrical in shape but more preferably tapers somewhat, e.g. by from 2 to 5 degrees, toward the wall 120 so that the filter material, if inserted as a cylindrical roll, is under increasing compression as the bulkhead 121 is approached.

The member 119 is closed by a transversely extending third bulkhead 124 not containing apertures 122, again screwed down the externally threaded portion of the tubular member 112.

A plurality of transverse bores 125 are provided in the tubular member 112 between the transverse wall member 120 and the first bulkhead 121 and similar bores 126 are provided through the tubular member 112 between the bulkhead 123 and the final bulkhead 124.

Contained within the central bore of the tubular member 112, snap fitted into an annular groove therein is a radially extending spider member 127 extending upwardly from which is a cage of rod members 128 terminated by base closure 129. The spider member 127 has a central aperture 130 and the cage contains a valve member 131 biased to close the aperture 130 by a coil spring 132.

In use, oil flows from the engine through conduit 7 through openings 6 into openings 116 of the auxiliary filter unit, passes around the outside of the member 119 to exit the auxiliary filter unit through the open base thereof and enter and pass through the conventional coarse filter in the normal manner. Oil exiting the coarse filter through the central sleeve 11 re-enters the auxiliary filter unit through the tubular bore of member 112. A lesser part of the oil flow proceeds through openings 126 to enter the member 119 and passes through openings 122 in bulkhead 123, through the filter material, out through openings 122 in bulkhead 121 and re-enters the tubular member 112 through apertures 125. A larger part of the oil depresses the valve member 131 against its spring 132 and passes through the aperture 130. The oil flows come together below the valve member 131 and exit the auxiliary filter unit and re-enter the engine to flow down conduit 5.

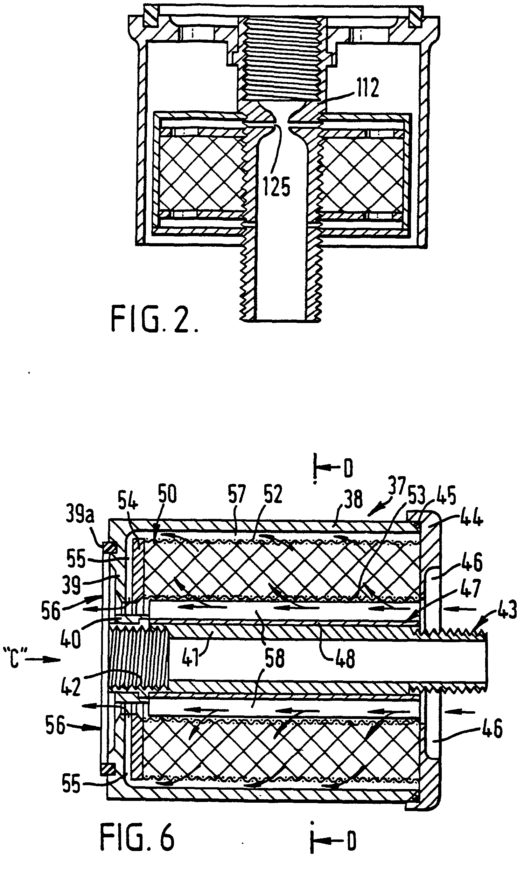

A modified form of auxiliary filter unit is shown in Figure 2 which is similar to that shown in Figure 1 with the exception that the valve arrangement within the bore of the tubular member 112 is omitted.

Instead, tubular bore 112 is narrowed at the exit of bores 125 to form a venturi. The venturi constitutes a fixed flow restriction for oil flowing directly down the passageway in tubular member 112 and further acts to provide suction to draw oil through the filter material by the alternative pathway.

Referring to Figures 3 to 5, there is shown an auxiliary filter unit 18 for use where the engine oil flow is the reverse of that which is conventional. The unit 18 has a body 19 provided axially with a tubular member 20 having at its upper end a widened bore which is threaded at 21 and is adapted to receive the threaded stem 3 of the filter mount. At its lower end the tubular member 20 is reduced in external diameter and is threaded at 22 to provide a stem portion capable of threaded engagement into the central sleeve 11 of the filter unit 9. About the intermediate central portion of the tubular member 20 there is disposed an annular valve seat element 23 having a thick-walled lower portion 23a and a thin-walled upper portion 23b. The lower portion 23a is provided with a plurality of axially-running slots 24 (best seen in Fig. 3), to provide an oil flow passage. Where the lower portion 23a joins to the upper portion 23b, there is provided a conical valve seating 25. Radially externally of the valve seat element 23 there is provided a tubular sleeve 26, and between the sleeve 26 and the surface 27 of the body 19 there is formed an annular space which receives a removable filter element 28, which may be a roll of paper. The upper end of the body 19 includes a transverse wall 29 in which are provided apertures 30 which, in use, communicate with the apertures 8 of the filter mount 1. An annular gasket 31 is positioned to abut and seal against the body 2 of the filter mount 1.

Within the upper portion 23b of the valve seat element 23 there is disposed a movable flow restrictor and by-pass valve element 32 which is resiliently urged towards the valve seat 25 by a compression spring 33 abutting a rib 34 on the tubular member 20.

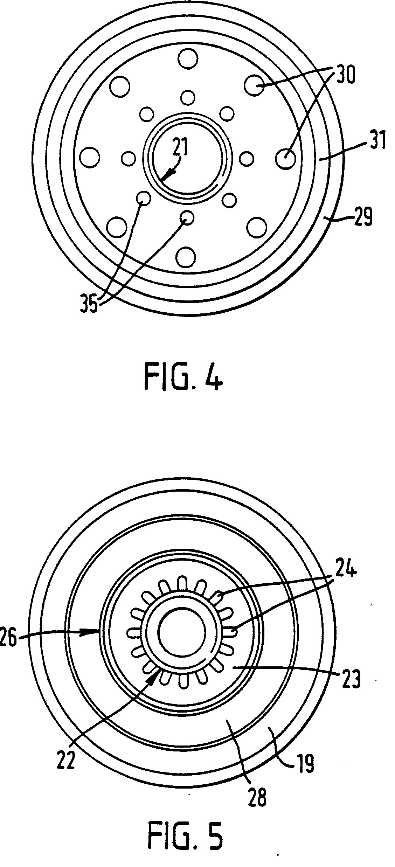

A plurality of openings 35 (see Fig. 4) are provided in the transverse wall 29 to provide a communication between the space 36, containing the valve element 32, and the exterior of the upper end of the body 19.

The whole of the auxiliary filter unit 18, other than the filter element 28, may be a multi-part injection moulding of, for example, the plastics material manufactured by I.C.I. under the name "Maranyl"-391.

In use, the auxiliary filter unit 18 is interposed between the filter mount 1 and the conventional full-flow filter unit 9. For this purpose, the auxiliary filter unit 18 is engaged onto the stem 3, by its own threading 21, and is tightened until the gasket 31 has sealed against the mount body 2. Then the full-flow filter unit 9 is engaged onto the threading 22 of the auxiliary unit 18, and is tightened until the gasket 17 is sealed against the lower end surface "S" of the body 19.

When oil is fed under pressure through conduit 5, it passes down centrally through the stem 3, through the tubular member 20 of the auxiliary filter unit 18, and through the sleeve 11 of the full-flow filter unit 9, whereafter it returns upwardly through the filter element 15 of the full-flow filter, and through the openings 16 to enter the annular chamber 16a communicating with the filter element 28 of the auxiliary filter.

The filter material employed in Figures 1 and 2 and in filter element 28 is constructed to have a filtering action which is many times more effective than that of the element 15 of the full-flow filter unit. By way of example, the auxiliary filter element 28 may be arranged to have a filtration action effective to trap particles of 5 μm (preferably 1 μm) diameter, which may be some one-twentieth to one-twenty-fifth of the smallest size of particle which will be trapped by a conventional full-flow filter. A further advantage is that the micron size filter can also remove water which may be present in emulsion with the oil.

At the oil flow pressures which are normally available in an internal combustion engine, the rate of flow through the auxiliary filter elements shown would be quite slow, and would be insufficient for adequate treatment of the oil flow if that were the only filtration path provided. In other words, merely substituting a micron-size filter element for an existing full-flow filter element in a conventional filter unit 9 would not permit sufficient oil to flow through the filtration system per unit of time.

With the arrangement including the auxiliary filter unit of the present invention, there is comparatively rapid flow of oil through the filter element 15 of the full-flow filter unit, followed by a much slower passage of a proportion of the oil through the filter element of the auxiliary unit. To compensate for the difference in rates of flow, the balance of the oil flow is by-passed, for instance referring to Figure 3 axially through the plurality of slots 24, then past the spring-loaded restrictor valve element 32 and its seating 25, then through the space 36 and the openings 35, to the openings 8 and back to the return flow conduit 7. Thus, the total return flow consists of a relatively small proportion of micron-filtered oil passing through the element 28 and the apertures 30, and a relatively larger proportion of full flow filtered oil passing through the by-pass route.

There is thus obtained the benefit that, whereas the full-flow routine is maintained substantially unaltered, a proportion at least of the oil is continuously subjected to a micron-size filtration.

The viscosity of the oil tends to lessen with rise of temperature. When the oil is cold and comparatively viscous, the by-pass valve 32, 25 can open further against its spring-loading, and when the oil thins with higher temperature, the valve 32, 25 can partially close accordingly.

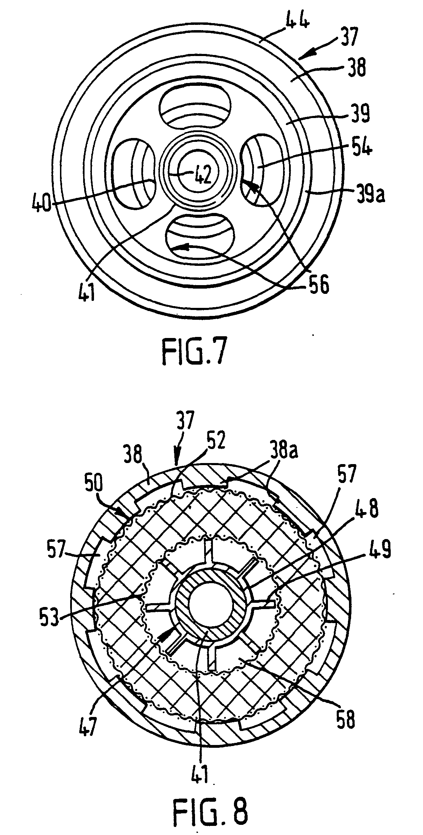

Referring now to Figs. 6 to 8, there is shown a further embodiment of auxiliary filter unit 37 which can be interposed between a filter mount 1 and a full-flow filter 9 in the same manner as has been described above for the embodiment of Figs. 3 to 5.

The unit 37 comprises a cylindrical body 38 having at one end a transverse wall 39 in which there is an annular recess receiving a sealing gasket 39a to seat, when in use, against body 2 of the filter mount 1. Centrally the wall 39 has a short sleeve portion 40 in which is secured a tubular member 41 having at that end a widened bore which is threaded at 42 to be engaged on the threaded stem 3 of the filter mount. At its other end, the tubular member 41 is reduced in external diameter and has a thread 43 to provide a stem portion capable of threaded engagement into the central sleeve 11 of the filter unit 9.

At the other end of the body 38 there is provided an end cap 44 which is sealed with respect to the body 38 by means of an O-ring 45. The end cap has an opening, or a plurality of openings, 46 to provide a communication path, when in use, between the return-flow openings 16 of the full-flow filter unit 9, and the interior of the body 38.

About the tubular member 41 there is engaged a spacer member 47 having a tubular element 48 from which project a plurality of radial fins 49. The spacer member 47 abuts at one end against the sleeve portion 40, and at the other end against the end cap 44. Secured to the inwardly facing surface of the end cap 44 there is an annular micron-size filter element 50 consisting, for example, of tissue material enclosed between concentric cylindrical walls 52, 53 of wire mesh. At its end remote from the end cap 44, the filter element has an end wall 54 which is spaced from the transverse wall 39 so as to leave a flow path 55 communicating with openings 56, in the wall 39, which when in use communicate with openings 8 of the filter mount 1. The filter unit is seated within ribs 38a of the cylindrical body 38 between which are defined flow paths 57 leading to the flow path 55.

When the auxiliary filter 37 is in use, oil under pressure fed from the engine passes through tubular member 41 to the conventional filter unit 9. The return flow from the unit 9 enters the auxiliary unit 37 through the openings 46 and passes into the flow path 58 bounded by the tubular element 48, the fins 49 and the inner wire mesh wall 53 of the auxiliary filter. There is a constriction formed between the end wall 54 of the auxiliary filter and the short sleeve portion 40, and this results in a proportion of the total flow in the flow path 58 being forced through the filter element 50 and into the flow path 57, to rejoin the main flow via the flow path 55.

It will be seen that one or more further auxiliary filter units, such as 18 or 37, may be connected in series with each other, between the filter mount 1 and the full-flow filter unit 9, so that the user can choose to position as many as he wishes in the circuit, provided that adequate external room is available.

The auxiliary filter units shown in Figures 1 and 2 have the considerable practical advantage that either can be fitted to conventional filter mounts 1, and used with conventional full-flow filter units 9, without any modification whatsoever of those two items. Thus, where a motor vehicle engine is fitted with a conventional full-flow filter unit, the user can, after delivery, simply unscrew the full-flow unit and insert an intermediate auxiliary filter unit, and then reattach the full-flow unit. Where the oil flow is the reverse of the conventional, a unit such as is shown in Figures 3 to 8 can be used in the same way.

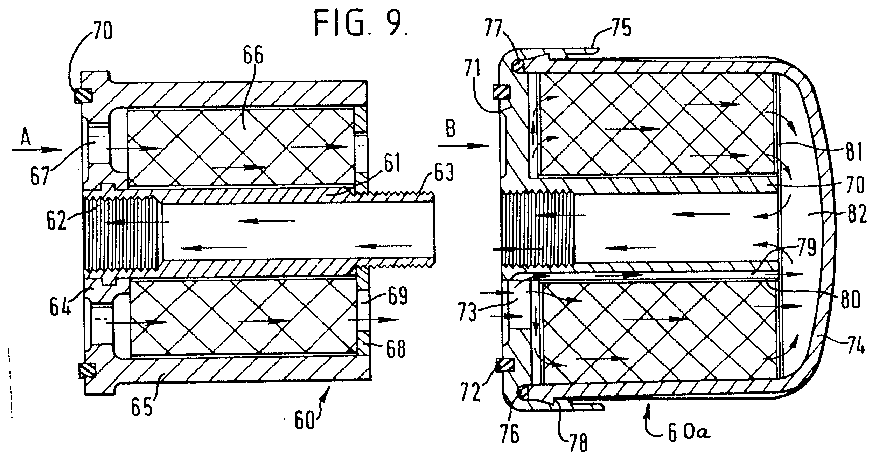

Figure 9 illustrates an alternative type of auxiliary filter unit according to the invention. As shown in Figure 9 a composite filtration unit comprises a coarse filtration unit 60 and a unit according to the invention 60a. The coarse filtration unit 60 is adapted to mount on a conventional mounting stem of a conventional filter mount. The coarse filter unit 60 comprises a central tubular member 61 having at one end an internally threaded bore 62 for threaded engagement with the filter mount of the engine. At its opposite end the tubular member 61 has a reduced diameter externally threaded portion 63 for connection to the unit according to the invention 60a. A circular wall member 64 has a central aperture containing an annular recess which is snap fitted over a corresponding annular bead formed on the tubular member 61 in the region of the internal thread 62. The wall 64 has integral therewith a cylindrical housing 65 containing a coarse filtration material 66. Access to the coarse filtration material 66 is provided by apertures 67 formed in the circular wall 64. An end closure member 68 closes the opposite end of the cylindrical member 65 and has openings 69 through which coarse filtered oil espaces.

As usual, a suitable flexible annular gasket 70 is provided protruding from an annular recess in the wall 64 for sealing against the filter mount of the engine.

The unit 60a according to the invention comprises a central tubular member 70 open at the right most end as seen in the drawing and having an internally threaded portion at its left most end for receiving the threaded portion 63 of the unit 60. Formed integral with the tubular member 70 is a circular end wall member 71 bearing a suitable resilient gasket 72 protruding from an annular recess in the wall 71 and adapted to seal against the end faces of the cylindrical member 65. The circular wall 71 is provided with a plurality of apertures 73 passing therethrough.

An end cap 74 which is generally cup shaped is arranged coaxially with the tubular member 70. A circumambient wall member 75 extends from the periphery of the wall 71 toward the end cap member 74. Immediately inboard of the circumambient wall 75 an annular groove 76 is provided in the wall 71 partially occupied by a sealing gasket 77. The perimeter of the cup shaped member 74 is received in this annular groove compressing the sealing member. The cup shaped member 74 forms a snap coupling with the circumambient wall 75 by virtue of snap interlocking formations 78 provided on these respective members.

The tubular member 70 is provided with a plurality of axially running grooves 79 communicating with the apertures 73 and extending to the free end of the tubular member. A filter material in the form of paper tissue wound on a cardboard former is arranged coaxially over the tubular member 70 and is compressed by the closure member 74. The closure member 74 is of slightly greater diameter where it is connected to the wall 71 than where it overlies the free end of the tubular member 70. Accordingly the compression of the filter material is greatest toward the right hand end of the filter as shown in the drawing. The axially running grooves 79 of the tubular member cooperate with the cardboard former 80 of the filter material to define passageways by-passing the filter material. A disk of mesh, for instance wire mesh 81 is provided at the free end of the tubular member 70 to define the end of the filter material and divide the filter material from an open chamber 82 which naturally is in fluid communication with the bore of the tubular member 70 and also with the flow channels formed by the axially running grooves 79.

In use, oil is received into the unit through the apertures 73 after coarse filtering and passes partially through the filter material to the chamber 82 and partially through the grooves 79 to the chamber 82 and is then returned to the engine through the bore of the tubular member 70.

It can be seen that the filter unit described with reference to Figure 9 is adapted to be mounted piggy back fashion on a coarse filter to be mounted to a conventional internal combustion engine oil filter mount.

The wall 71 and the closure 74 of the filter unit may be formed by injection moulding a suitable plastics material such as "Maranyl"®.

For the coarse filter, a pleated paper filter element is adequate. The exterior wall and circular end wall 64 may be injection moulded integrally in suitable plastics material whilst the tubular member may conveniently be formed as a steel insert.

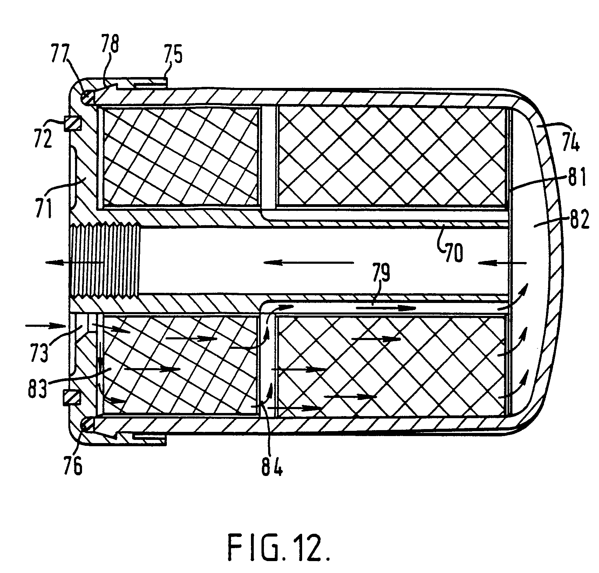

Finally, there is shown in Figure 12 a variant of the filter unit shown in Figure 9 in which the coarse filter is included in the same housing as the fine micron filter. The construction of the filter unit shown in Figure 12 is generally similar to that of the unit shown in Figure 9 and like parts are indicated by the same reference numbers. Essentially, compared to Figure 9 the space to the left of the filter material is extended sufficiently to incorporate a coarse filter material 83 such as a pleated paper filter which is interposed between the apertures 73 and the commencement of the grooves 79. The coarse filter material 83 is separated from the fine filter material by a support grid 84. The filter is adapted to be mounted to a conventional engine filter mount as a direct replacement of the conventional coarse filter so as to provide coarse filtration of the full flow of the oil and fine filtration of a portion of the oil flow, the remainder by-passing the fine filter through a by-pass which is never closed but is constantly present during operation.

Once again, the member 74 and the wall 71 bearing its integral grooved tubular member 70 are each suitable for forming by injection moulding in a plastics material. Once again, the member 74 tapers toward the right as shown so that the filtration material is increasingly compressed toward the right of the filter. It can be seen that the filter described with reference to Figure 12 is particularly well adapted to simple and rapid manufacture and assembly since all the parts are simply inserted in the appropriate place and the member 74 and the wall 75 are snapped together.

The progressive compression of the filter material described with reference to several of the embodiments above ensures a progressive build up of contaminant particles through the filter material leading to longer filter life.

**Claims**

1. A fine filter unit (110, 37) adapted for interpolation between a coarse filter unit and a mounting which normally receives said coarse filter unit directly thereon, wherein the fine filter unit comprises a housing having a pair of mounting locations, a first (116) and a second (114) inlet for liquid and a first (118a) and a second outlet (113) for liquid, the first inlet and the second outlet being provided at one said mounting location and the second inlet and the first outlet being provided at the other said mounting location, coupling means at each said mounting location respectively for coupling the fine filter unit to said coarse filter unit and to said filter mounting, means (111, 119) in said housing defining a first flow passage for fluid between the first inlet and the first outlet of the housing, means (126, 122, 125) in said housing defining a second flow passage for liquid between the second inlet and the second outlet of the housing, and a fine filter member in said housing for removing particles of 5 μm and greater, wherein said second flow passage includes a path through said fine filter member and a by-pass path (130) about said fine filter member whereby in normal use there is simultaneous flow through said fine filter member and said by-pass path such that a proportion only of liquid passing through the second flow path passes through said fine filter member.

2. A unit as claimed in Claim 1, wherein said mounting locations are a pair of opposed end walls and the first inlet and the second outlet are provided in one end wall and the first outlet and the second inlet are provided in the other end wall.

3. A unit as claimed in Claim 2, comprising as said coupling means a threaded bore (113) in one end wall for connecting the unit to a source of liquid to be filtered and a threaded spigot (114) on the other end wall for connecting the unit to a coarse filter unit.

4. A unit as claimed in Claim 3, wherein said threaded bore (113) is at said second outlet and said threaded spigot (114) is at said second inlet.

5. A fine filter unit as claimed in Claim 3, further comprising a tubular member (41) extending axially through said housing between said threaded bore (42) and threaded spigot (43), a space within the housing around said tubular member, said second inlet (46) and said second outlet (56) opening into said annular space, and said fine filter member (50) situated within this annular space.

6. A fine filter unit (60a) for connection on the downstream side of a coarse filter unit connected to a source of liquid to be filtered and providing inlet and return through flow paths, the fine filter unit comprising a housing (71, 74) having a wall member (71) providing a mounting face and containing a hollow cylindrical fine filter member capable of filtration to remove particles of dimensions of five μm and greater, an inlet (73) in said mounting face for liquid to be filtered, an outlet in the mounting face for filtered liquid, a flow path for liquid within the housing between an inlet to one annular end face of said fine filter member and an outlet (81) from the other annular end face of said fine filter member, and a by-pass (79) communicating between said inlet and said outlet of the filter unit within the housing, which by-pass has a resistance to flow of liquid no greater than that of the fine filter member whereby in use a proportion only of liquid passes through the fine filter member.

7. A unit as claimed in Claim 6, further comprising a tube (70) open at one end extending from said outlet within the housing, the hollow cylindrical fine filter member surrounding said tube within said housing, and said by-pass flow path extending between said fine filter member and said tube away from said wall member (71) along the exterior of said tube toward the open end thereof.

8. Filtration apparatus comprising a housing (71, 74) having an inlet (73) and an outlet for liquid to be filtered, means defining a flow path between said inlet and said outlet, said flow path containing in series a coarse filter member (83) for treating at least substantially all of the liquid passing through the flow path and a fine filter member capable of removing particles of 5 micrometres and greater said fine filter member consisting essentially of a roll of paper tissue material which is under radial compression which increases progressively in the flow direction, wherein the flow path includes a by-pass (79) around said fine filter member for a proportion of liquid passing through the flow path which by-pass offers no greater resistance to flow than said fine filter member.

9. Apparatus as claimed in Claim 8, wherein said coarse filter member and said fine filter member are arranged one behind the other in said housing.

10. Apparatus as claimed in Claim 9, wherein the housing comprises a mounting plate member (71) having an axially located threaded bore for mounting on a complimentary threaded stem and defining said outlet and having at least one liquid inlet passageway defining said inlet, a body portion (74) closed at one end and mounted on said mounting plate member (71) at the other end thereof and an axially extending tube (70) extending from adjacent said closed end of the body portion to said threaded bore.

11. Apparatus as claimed in Claim 10, wherein the by-pass is provided by one or more axially running external grooves (79) in the tube (70).

12. Apparatus as claimed in Claim 10, wherein the coarse filter member (83) coaxially surrounds the tube (70) adjacent the mounting plate member (71) and the said fine filter member coaxially surrounds the tube (70) between the coarse filter member and said closed end.

13. Apparatus as claimed in Claim 10 or Claim 12, wherein said by-pass path extends between said fine filter member and the exterior of said tube (70) along the length of the fine filter member towards said closed end of the body portion.

14. Apparatus as claimed in any one of Claims 1 to 12 or apparatus as claimed in Claim 13, wherein the by-pass includes a variable flow restrictor means (130, 131), resiliently loaded in a manner to tend to increase restriction of flow.

15. Apparatus as claimed in any one of Claims 1 to 12 or apparatus as claimed in Claim 13, wherein the by-pass is permanently open.

## Patentansprüche

1. Feinfiltereinheit (110, 37) zum Einbau zwischen einer Grobfiltereinheit und einem Sokkel, auf dem normalerweise die Grobfiltereinheit direkt vorgesehen ist, wobei die Filtereinheit ein Gehäuse mit einem Paar Montierstellen, einen ersten (116) und einen zweiten (114) Einlaß für Flüssigkeit und einen ersten (118a) und einen zweiten (113) Auslaß für Flüssigkeit, wobei der erste Einlaß und der zweite Auslaß an einer der Montierstellen und der zweite Einlaß und der erste Auslaß an der anderen der Montierstellen vorgesehen sind, Kopplungsstücke an jeder entsprechenden Montierstelle zum Ankoppeln der Feinfiltereinheit an die Grobfiltereinheit und an den Filtersockel, Einrichtungen (111, 119) im Gehäuse, die einen ersten Durchflußweg für Flüssigkeit zwischen dem ersten Einlaß und dem ersten Auslaß des Gehäuses definieren, Einrichtungen (126, 122, 125) in dem Gehäuse, die einen zweiten Durchflußweg für Flüssigkeit zwischen dem zweiten Einlaß und dem zweiten Auslaß des Gehäuses definieren, und ein Feinfilterelement im Gehäuse zum Zurückhalten von Teilchen von 5 µm und größer aufweist, wobei der zweite Durchflußweg einen Weg durch das Feinfilterelement und einen Umgehungsweg (130) um das Feinfilterelement aufweist, wobei im Normalbetrieb gleichzeitig Fluß durch das Feinfilterelement und dem Umgehungsweg herrscht, so daß nur ein Teil der durch den zweiten Durchflußweg strömenden Flüssigkeit durch das Feinfilterelement fließt.

2. Einheit nach Anspruch 1, dadurch gekennzeichnet, daß die Montierstellen ein Paar gegenüberliegender Endwände sind und daß der erste Einlaß und der zweite Auslaß in einer Endwand und der erste Auslaß und der zweite Einlaß in der anderen Endwand vorgesehen sind.

3. Einheit nach Anspruch 2, dadurch gekennzeichnet, daß die Kopplungsstücke eine Gewindebohrung (113) in einer Endwand zum Verbinden der Einheit mit einer Quelle zu filternder Flüssigkeit und ein Gewindezapfen (114) an der anderen Endwand zum Verbinden der Einheit mit einer Grobfiltereinheit sind.

4. Einheit nach Anspruch 3, dadurch gekennzeichnet, daß die Gewindebohrung (113) am zweiten Auslaß und der Gewindezapfen (114) am zweiten Einlaß sind.

5. Feinfiltereinheit nach Anspruch 3, dadurch gekennzeichnet, daß sie weiterhin ein Röhrenelement (41), das sich in Längsrichtung durch das Gehäuse zwischen der Gewindebohrung (42) und dem Gewindezapfen (43) erstreckt, einen freien Raum innerhalb des Gehäuses um das Röhrenelement herum, wobei der zweite Einlaß (46) und der zweite Auslaß (56) in diesen kreisförmigen Raum münden und das Feinfilterelement (50) in diesem kreisförmigen Raum gelagert ist, aufweist.

6. Feinfiltereinheit (60a) zum Verbinden einer mit einer Quelle von zu filternder Flüssigkeit verbundener Grobfiltereinheit auf der stromabwärts liegenden Seite, bei der Einlaß und Rückführung durch Stromwege vorgesehen sind, wobei die Feinfiltereinheit ein Gehäuse (71, 74) mit einem Wandteil (71), die eine Montierfläche bildet und ein hohlzylindrisches Feinfilterelement enthält, welches Teilchen der Größe von 5 µm und größer entfernen kann, enthält, einen Einlaß (73) in der Montierfläche für zu filternde Flüssigkeit, einen Auslaß in der Montierfläche für gefilterte Flüssigkeit, einen Stromweg für Flüssigkeit innerhalb des Gehäuses zwischen einem Einlaß auf einer ringförmigen Endfläche des Feinfilterelementes und einen Auslaß (81) von der anderen ringförmigen Endfläche des Feinfilterelementes, und eine Umgehungsleitung (79) aufweist, die eine Verbindung zwischen dem Einlaß und dem Auslaß der Filtereinheit innerhalb des Gehäuses bildet, wobei die Umgehungsleitung einen Strömungswiderstand für Flüssigkeit hat, der nicht größer ist als der des Feinfilterelementes, wodurch im Betrieb nur ein Teil des Flüssigkeit durch das Feinfilterelement strömt.

7. Einheit nach Anspruch 6, dadurch gekennzeichnet, daß sie weiterhin ein an einem Ende offenes Rohr (70) aufweist, das sich vom Auslaß innerhalb des Gehäuses erstreckt, daß das hohlzylindrische Feinfilterelement das Rohr innerhalb des Gehäuses umgibt, und daß der Umgehungsstromweg sich zwischen dem Feinfilterelement und dem Rohr vom Wandteil (71) weg entlang der Außenseit des Rohres zum offenen Ende hin erstreckt.

8. Filterapparat mit einem Gehäuse (71, 74) mit einem Einlaß (73) und einem Auslaß für zu filternde Flüssigkeit, mit einer Einrichtung zum Definieren eines Stromweges zwischen dem Einlaß und dem Auslaß, wobei der Stromweg in Reihe ein Grobfilterelement (83) zum Behandeln wenigstens der meisten Flüssigkeit, die durch den Stromweg fließt, und einem Feinfilterelement, das Teilchen von 5 µm und größer entfernen kann, wobei das Feinfilterelement im wesentlichen aus einer Rolle aus Papiergewebematerial besteht, das radial und progressiv in Flußrichtung zunehmend zusammengedrückt wird, wobei der Stromweg eine Umgehungsleitung (79) um das Feinfilterelement für einen Teil der durch den Stromweg fließenden Flüssigkeit einschließt, wobei die Umgehungsleitung keinen größeren Stromwiderstand als das Feinfilterelement hat.

9. Apparat nach Anspruch 8, in dem das Grobfilterelement und das Feinfilterelement hintereinander in dem Gehäuse angeordnet sind.

10. Apparat nach Anspruch 9, in dem das Gehäuse eine Sockelplatte (71) mit einer axial angeordneten Gewindebohrung zum Anbringen eines mit einem komplementären Gewinde versehenen Schaftes aufweist, wobei die Sockelplatte den Auslaß definiert und wenigstens einen Flüssigkeitseingangsweg hat, der den Einlaß definiert, weiterhin einen Gehäuseabschnitt (74), der an einem Ende verschlossen ist und auf der Sockelplatte (71) an dessen anderem Ende angebracht ist, sowie ein in Längsrichtung sich erstreckendes Rohr (70), das benachbart vom abgeschlossenen Ende des Gehäusebereiches zur Gewindebohrung ragt.

11. Apparat nach Anspruch 10, dadurch gekennzeichnet, daß die Umgehungsleitung durch eine oder mehrere in Längsrichtung verlaufende äußere Nuten (79) in dem Rohr (70) gebildet ist.

12. Apparat nach Anspruch 10, dadurch gekennzeichnet, daß das Grobfilterelement (83) das Rohr (70) in der Nähe der Sockelplatte (71) koaxial umgibt und das Feinfilterelement das Rohr (70) zwischen dem Grobfilterelement und dem geschlossenen Ende koaxial umgibt.

13. Apparat nach Anspruch 10 oder Anspruch 12, dadurch gekennzeichnet, daß die Umgehungsleitung sich zwischen dem Feinfilterelement und dem Äußeren des Rohrs (70) entlang der Länge des Feinfilterelementes zum abgeschlossenen Ende des Gehäuseabschnittes hin erstreckt.

14. Apparat nach einem der Ansprüche 1 bis 12 oder Apparat nach Anspruch 13, dadurch gekennzeichnet, daß die Umgehungsleitung einen variablen Durchflußbeschränker (130, 131) umfaßt, der in einer solchen Weise federnd vorgespannt ist, daß er die Beschränkung des Durchflusses erhöht.

15. Apparat nach einem der Ansprüche 1 bis 12 oder Apparat nach Anspruch 13, dadurch gekennzeichnet, daß die Umgehungsleitung andauernd offen ist.

**Revendications**

1. Unité de filtration fine (110, 37) adaptée pour être intercalée entre une unité de filtration grossière et un support qui reçoit normalement directement sur lui ladite unité de filtration grossière, dans laquelle l'unité de filtration fine comprend un carter pourvu d'une paire d'emplacements de montage, une première (116) et une seconde (114) entrée de liquide et une première (118a) et une seconde (113) sortie de liquide, la première entrée et la seconde sortie étant disposées dans un desdits emplacements de montage, et la seconde entrée et la première sortie étant disposées dans l'autre emplacement de montage, des moyens de raccordement prévus respectivement dans chacun desdits emplacements de montage pour le raccordement de l'unité de filtration fine avec l'unité de filtration grossière et avec ledit support de filtre, des moyens (111, 119) prévus dans ledit carter et définissant un premier passage d'écoulement de fluide entre la première entrée et la première sortie du carter, des moyens (126, 122, 125) prévus dans ledit carter et définissant un second passage d'écoulement de liquide entre la seconde entrée et la seconde sortie du carter, et un élément de filtration fine prévu dans ledit carter pour enlever des particules de 5 µm et plus, dans lequel ledit second passage d'écoulement comprend une voie traversant ledit élément de filtration fine et une voie de dérivation (130) contournant ledit élément de filtration fine de telle sorte que, en service normal, il se produise simultanément un écoulement au travers dudit élément de filtration fine et de ladite voie de dérivation afin que seulement une proportion du liquide passant dans la seconde voie d'écoulement traverse ledit élément de filtration fine.

2. Unité selon la revendication 1, dans laquelle lesdits emplacements de montage sont constitués par deux parois extrêmes opposées, et la première entrée et la seconde sortie sont situées dans une paroi extrême tandis que la première sortie et la seconde entrée sont situées dans l'autre paroi extrême.

3. Unité selon la revendication 2, comprenant comme moyens de raccordement précités un trou fileté (113) ménagé dans une paroi extrême pour relier l'unité à une source de liquide à filtrer et une broche filetée (114) prévue sur l'autre paroi extrême pour relier l'unité à une unité de filtration grossière.

4. Unité selon la revendication 3, dans laquelle ledit trou fileté (113) est prévu à ladite seconde sortie et ladite broche filetée (114) est prévue à ladite seconde entrée.

5. Unité selon la revendication 3, comprenant en outre un élément tubulaire (41) s'étendant axialement au travers dudit carter entre ledit trou fileté (42) et ladite broche filetée (43), un espace prévu à l'intérieur du carter autour dudit élément tubulaire, ladite seconde entrée (46) et ladite seconde sortie (56) débouchant dans ledit espace annulaire et ledit élément de filtration fine (50) étant situé à l'intérieur de cet espace annulaire.

6. Unité de filtration fine (60a) pour un raccordement avec le côté d'aval d'une unité de filtration grossière qui est reliée à une source de liquide à filtrer et assurant une entrée et un retour par l'intermédiaire de voies d'écoulement, l'unité de filtration fine comprenant un carter (71, 74) pourvu d'un élément de paroi (71) formant une face de montage et contenant un élément cylindrique creux de filtration fine capable de filtration pour enlever des particules de dimensions de 5 µm et plus, une entrée (73) de liquide à filtrer située dans ladite face de montage, une sortie de liquide filtré située dans la face de montage, une voie d'écoulement de liquide à l'intérieur du carter entre une entrée dans une face extrême annulaire dudit élément de filtration fine et une sortie (81) de l'autre face extrême annulaire dudit élément de filtration fine, une voie de dérivation (79) établissant une communication entre ladite entrée et ladite sortie de l'unité de filtration à l'intérieur du carter, ladite voie de dérivation ayant une résistance à l'écoulement de liquide qui n'est pas supérieure à celle de l'élément de filtration fine afin que, en service, seupement une proportion de liquide passe au travers de l'élément de filtration fine.

7. Unité selon la revendication 6, comprenant en outre un tube (70) ouvert à une extrémité et s'étendant à partir de ladite sortie à l'intérieur du carter, l'élément cylindrique creux de filtration fine entourant ledit tube à l'intérieur dudit carter et ladite voie d'écoulement de dérivation s'étendant entre ledit élément de filtration fine et ledit tube, en éloignement dudit élément de paroi (71) le long de l'extérieure dudit tube et en direction de son extrémité ouverte.

8. Appareil de filtration comprenant un carter (71, 74) pourvu d'une entrée (73) et d'une sortie pour du liquide à filtrer, des moyens définissant une voie d'écoulement entre ladite entrée et ladite sortie, ladite voie d'écoulement contenant en série un élément de filtration grossière (83) qour traiter au moins sensiblement tout le liquide passant dans la voie d'écoulement et un élément de filtration fine capable d'enlever des particules de 5 μm et plus, ledit élément de filtration fine se composant essentiellement d'un rouleau de matière formant tissu de papier qui est soumis à une compression radiale qui augmente progressivement dans la direction d'écoulement, la voie d'écoulement comprenant une voie de dérivation (79) entourant ledit élément de filtration fine pour qu'une proportion de liquide passe dans la voie d'écoulement, ladite voie de dérivation ne présentant pas une résistance à l'écoulement supérieure à celle dudit élément de filtration fine.

9. Appareil selon la revendication 8, dans lequel ledit élément de filtration grossière et ledit élément de filtration fine sont disposés l'un derrière l'autre dans ledit carter.

10. Appareil selon la revendication 9, dans lequel le carter comprend un élément (71) formant plaque de montage, pourvu d'un trou fileté situé axialement pour un montage sur une tige à filetage complémentaire, en définissant ladite sortie et en comportant au moins un passage d'entrée de liquide définissant ladite entrée, une partie formant corps (74) qui est fermée à une extrémité et qui est montée sur ledit élément (71) formant plaque de montage à son autre extrémité, et un tube (70) s'étendant axialement depuis une position adjacente à ladite extrémité fermée de la partie formant corps jusqu'audit trou fileté.

11. Appareil selon la revendication 10, dans lequel la dérivation est formée par une ou plusieurs rainures externes (79) s'étendant axialement dans le tube (70).

12. Appareil selon la revendication 10, dans lequel l'élément de filtration grossière (83) entoure coaxialement le tube (70) dans une position adjacente à l'élément (71) formant plaque de montage et ledit élément de filtration fine entoure coaxialement le tube (70) entre l'élément de filtration grossière et ladite extrémité fermée.

13. Appareil selon la revendication 10 ou 12, dans lequel ladite voie de dérivation s'étend entre ledit élément de filtration fine et l'extérieur dudit tube (70) sur la longueur de l'élément de filtration fine et en direction de ladite extrémité fermée de la partie formant corps.

14. Appareil selon l'une quelconque des revendications 1 à 12 ou appareil selon la revendication 13, dans lequel la voie de dérivation comprend un moyen d'étranglement variable d'écoulement (130, 131) qui est sollicité élastiquement de façon à avoir tendance à augmenter l'étranglement de l'écoulement.

15. Appareil selon l'une quelconque des revendications 1 à 12 ou appareil selon la revendication 13, dans lequel la voie de dérivation est ouverte en permanence.

FIG. 1.

FIG. 2.

FIG. 6

FIG. 3

FIG. 4

FIG. 5

4

FIG.7

FIG.8

5

FIG. 9.

EP 0 243 346 B1

FIG. 10.

67

70

FIG. 11.

73

72

FIG. 12.